# EUROPÄISCHE PATENTANMELDUNG

(11) **EP 1 243 462 A2**
(43) Veröffentlichungstag der Anmeldung: **25.09.2002**
(21) Anmeldenummer: 02005834.3
(22) Anmeldetag: 14.03.2002
(51) Int. Cl.: B60N 2/58

(54) **Befestigungssystem zur Verhakung eines Polsterstoffs auf der Schaumstoffunterlage eines Fahrzeugsitzes**

(30) Priorität: 22.03.2001 DE 10113960
(71) Anmelder: A. Raymond & Cie, 38028 Grenoble (FR)
(72) Erfinder: Tremmel, Günter, 79739 Schwörstadt (DE); Regensburger, Jan, 79400 Kandern (DE)
(74) Vertreter: Kirchgaesser, Johannes, Dipl.-Ing.

(57) **Zusammenfassung**

Das Befestigungssystem dient zur Verhakung eines Polsterbezugsstoffs (1) auf der Schaumstoffunterlage (2) eines Fahrzeugsitzes mittels Profilleisten (5), welche mit dem Polsterbezugsstoff (1) über ein Stoffband (4) verbunden sind. Hierzu sind in der Schaumstoffunterlage (2) mindestens zwei Längskanäle (6) vorgesehen sind, welche zur Verhakung der Profilleisten (5) dienen, wobei in die Längskanäle (6) mündende Schlitze (7) an der Außenseite der Schaumstoffunterlage (2) austreten.

Die Profilleisten (5) sind an besonders kritischen Verhakungsstellen mit einem Halteclip (9) verbindbar, welcher aus einer an der Unterseite der Schaumstoffunterlage (2) anlegbaren Platte (10) sowie an der Platte (10) angeformten Verhakungsmitteln (11) besteht, die die Schaumstoffunterlage (2) von unten durchdringen und im Längskanal (6) enden. Dieser Halteclip (9) bietet den Vorteil, daß die Profilleisten (5) nach dem Eingriff in die Längskanäle (6) zusätzlich einrastbar sind.

## Beschreibung

Die Erfindung bezieht sich auf ein Befestigungssystem zur Verhakung eines Polsterbezugsstoffs auf der Schaumstoffunterlage eines Fahrzeugsitzes unter Verwendung von als Verhakungsmittel dienender Profilleisten, welches beispielsweise aus der **DE 198 08 995 C1** bekannt ist. Die Profilleisten sind hierbei mit dem Polsterbezugsstoff über ein Stoffband verbunden und in der Schaumstoffunterlage sind mindestens zwei der Profilleiste angepaßte Längskanäle vorgesehen, welche zur Verhakung der Profilleisten dienen, wobei in die Längskanäle mündende Schlitze an der Außenseite der Schaumstoffunterlage austreten.

Beim Aufpolstern der Schaumstoffunterlage werden die Profilleisten in die Schlitze eingedrückt, bis sich diese in den Längskanälen verhaken, so daß es zu einer definierten Fixierung des Polsterbezugsstoffs auf der Schaumstoffunterlage kommt. Die Verhakung der Profilleisten in den Längskanälen bleibt auch dann gewährleistet, wenn der Sitzbenutzer bei stoßartiger Krafteinwirkung, wie sie im Fahrbetrieb eines Fahrzeugs auftreten kann, das Schaumstoffmaterial stark zusammendrückt. Es hat sich jedoch herausgestellt, daß bei Schalensitzen mit seitlich stark hochgezogenen Wulsten diese durch eine einseitige Krafteinwirkung des Sitzbenutzers zur Seite gedrückt werden können, so daß die Schlitze auseinanderklaffen und die Profilleiste an dieser Stelle aus der Ausnehmung heraustreten kann.

Aufgabe der Erfindung ist es, das Befestigungssystem so zu gestalten, daß auch bei derart extremen Belastungen an den kritischen Stellen die Fixierung der Profilleiste in den Längskanälen gewährleistet bleibt. Diese Aufgabe wird erfindungsgemäß dadurch gelöst, daß die Profilleisten jeweils mit einem Halteclip verbindbar sind, welcher aus einer an der Unterseite der Schaumstoffunterlage anlegbaren Platte sowie den Schaumstoff durchdringenden und im Längskanal endenden Verhakungsmitteln besteht, in welche die Profilleisten nach dem Eingriff in die Längskanäle zusätzlich einrastbar sind.

Nach einer bevorzugten Weiterbildung der Erfindung sind die Verhakungsmittel aus zwei an der Platte einander gegenüberliegend angeformten Stegen gebildet, an deren freien auffederbaren Enden nach innen gerichtete Rasthaken mit schräg zur Mitte verlaufenden Einführflächen und quer zur Mitte abstehenden Halteflächen angeformt sind. Die Spitzen der Rasthaken können hierbei zweckmäßigerweise in Einführrichtung abgewinkelt und die Profilleisten mit entsprechenden Rillen zum Eintauchen der Spitzen versehen sein. Dies hat den Vorteil, daß die Profilleisten nach dem Eindrücken in die Einführflächen der Rasthaken von deren Spitzen hintergriffen werden und so zwischen den Rasthaken unlösbar fixiert sind.

In der Zeichnung ist diese bevorzugte Ausführungsform der Erfindung dargestellt und soll nachfolgend näher erläutert werden. Es zeigt:
- Fig. 1: Einen Teilschnitt durch eine Schaumstoffunterlage mit aufgezogenem Polsterbezugsstoff und eingebautem Halteclip mit erfindungsgemäß verrasteter Profilleiste,
- Fig. 2: den Halteclip in perspektivischer Darstellung,
- Fig. 3: einen Teilschnitt durch die linke Hälfte der Schaumstoffunterlage mit montagebereitem Polsterbezugsstoff vor dem Einführen der Profilleiste in den Längskanal nach dem Stand der Technik, und
- Fig. 4: den gleichen Teilschnitt durch die rechte Hälfte der Schaumstoffunterlage mit eingeführter Profilleiste und angelegtem Polsterbezugsstoff nach dem Stand der Technik.

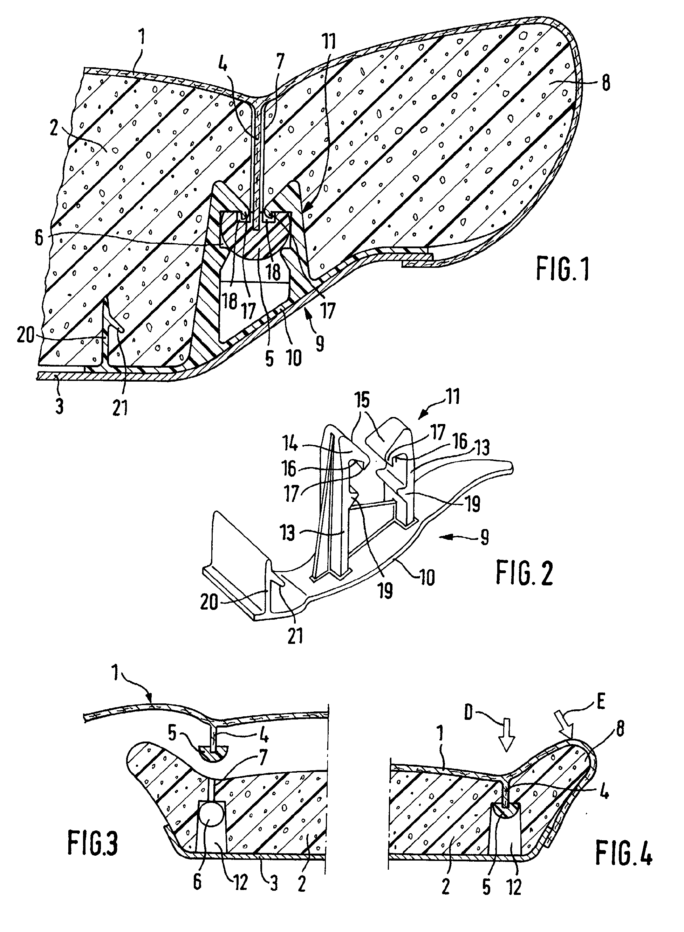

Das der Erfindung zugrunde liegende Befestigungssystem dient, wie aus den **Figuren 3 und 4** ersichtlich, zur Verhakung eines Polsterbezugsstoffs **1** auf einer Schaumstoffunterlage **2**, welcher im Blechboden **3** eines Fahrzeugsitzes eingebettet ist. Der Polsterbezugsstoff **1** ist hierbei an seiner Unterseite über Stoffbänder **4** mit parallel zueinander verlaufenden Profilleisten **5** verbunden, während in der Schaumstoffunterlage **2** den Profilleisten **5** im Querschnitt angepasste Längskanäle **6** vorgesehen sind, welche dem Eingriff der Profilleisten **5** dienen. In die Längskanäle **6** münden Schlitze **7**, welche an der Außenseite der Schaumstoffunterlage **2** austreten und zur Aufnahme der Stoffbänder **4** dienen.

Beim Aufpolstern der Schaumstoffunterlage **2** werden die Profilleisten, wie aus **Fig.3** ersichtlich, oberhalb der Schlitze **7** positioniert und dann unter Aufweitung der Schlitze **7** in die Längskanäle **6** in Richtung des Pfeiles "**D**" niedergedrückt, wobei sich die Profilleiste **5** nach der Rückbildung der Schlitze **5** in ihre ursprüngliche Form im Längskanälen **6**verhakt und dabei den Polsterbezugsstoff **1** über die Bänder **4,** wie aus **Fig. 4** ersichtlich, fest an die Außenfläche der Schaumstoffunterlage **2** herunterzieht und verspannt.

Diese Art der Verhakung der Profilleisten **5** sorgt bei normaler Beanspruchung der Schaumstoffunterlage **2** für eine sichere Fixierung des Polsterbezugsstoffs **1**. Bei Schalensitzen mit stark hochgezogenen Seitenwulsten **8** hingegen kann es passieren, daß diese durch einseitige Krafteinwirkung in Richtung des Pfeiles **"E**" soweit zur Seite gedrückt werden, daß durch Auseinanderklaffen der Schlitze **7** die Profilleisten **5** an dieser Stelle aus den Längskanälen **6** heraustreten und der Polsterbezugsstoff **1** nicht mehr gehalten ist.

Um dies zu vermeiden, wurde der in **Fig. 2** dargestellte Halteclip **9** aus Kunststoffmaterial entwickelt, in welchen die ebenfalls aus Kunststoff hergestellte Profilleiste **5** zusätzlich verrastbar ist. Dieser Halteclip **9** besteht aus einer in seiner Form der Unterseite der Schaumstoffunterlage **2** angepaßten Anlageplatte **10** sowie Verhakungsmitteln **11**, welche durch eine entsprechende Aussparung **12** von der Unterseite in die Schaumstoffunterlage **2** eingeführt werden und im Längskanal **6** enden.

Diese Verhakungsmittel **11** bestehen vorzugsweise aus zwei an der Anlageplatte **10** einander gegenüberliegend angeformten Stegen **13**, an deren freien Enden nach innen gerichtete Rasthaken **14** angefornt sind. Diese Rasthaken **14** besitzen schräg nach innen gerichtete Einführflächen **15** und quer zur Mitte abstehende Halteflächen **16**. Die Einführflächen **15** sind derart geneigt, daß die Rasthaken **14** beim Eindrücken der Profilleiste **5** aufgrund der auf die Einführflächen **15** einwirkenden Kraftkomponente und der Elastizität der freien Enden der Stege **13** nach außen auffedern und nach dem Passieren der Hakenspitzen **17** wieder in ihre Ursprungslage zurückfedern, so daß die Profilleisten **5** zusätzlich gehalten werden.

Um diese Verrastung noch zusätzlich abzusichern, können die Spitzen **17** der Rasthaken **14** in Einführrichtung abgewinkelt und die Profilleisten **5** an ihrer Oberseite beiderseits des eingegossenen Stoffbandes **4** mit entsprechenden Rillen **18** versehen sein, in welche die abgewinkelten Spitzen **17** dann einrasten. Um die eingedrückte Profilleiste **5** an ihrer Unterseite abzustützen, sind noch zwei weitere Vorsprünge **19** an den Stegen **13** gegenüberliegend angeformt, welche ein Durchsacken der Profilleiste **5** verhindern.

Die Anlageplatte **10** ist so geformt, daß diese sich auf ihrer ganzen Länge der Unterseite der Schaumstoffunterlage **2** und der Oberseite des Blechbodens **3** voll anpaßt. Damit der Halteclip **9** bis zur Auflage der Schaumstoffunterlage **2** auf dem Blechboden **3** sicher an seinem vorbestimmten Platz gehalten wird, ist an dem einen Ende der Anlageplatte **10** ein weiterer Steg **20** parallel zu den Stegen **13** der Rasthaken **14** angeformt und an seinem freien Oberrand mit einer rückwärts gerichteten widerhakenartigen Kante **21** versehen, welche sich nach dem Eindrücken in die Unterseite der Schaumstoffunterlage **2** fest eingräbt.

## Patentansprüche

1. Befestigungssystem zur Verhakung eines Polsterbezugsstoffs (1) auf der Schaumstoffunterlage (2) eines Fahrzeugsitzes mittels Profilleisten (5), welche mit dem Polsterbezugsstoff (2) über ein Stoffband (4) verbunden sind, wobei in der Schaumstoffunterlage (2) mindestens zwei, der Profilleiste (5) angepaßte Längskanäle (6) vorgesehen sind, welche zur Verhakung der Profilleisten (5) dienen, und wobei in die Längskanäle (6) mündende Schlitze (7) an der Außenseite der Schaumstoffunterlage (2) austreten, **dadurch gekennzeichnet, daß** die Profilleisten (5) jeweils mit einem Halteclip (9) verbindbar sind, welcher aus einer an der Unterseite der Schaumstoffunterlage (2) anlegbaren Platte (10) sowie den Schaumstoff (2) durchdringenden und in den Längskanälen (6) endenden Verhakungsmitteln (11) besteht, in welche die Profilleisten (5) nach dem Eingriff in die Längskanäle (6) zusätzlich einrastbar sind.

2. Befestigungssystem nach Anspruch 1, **dadurch gekennzeichnet, daß** die Verhakungsmittel (11) aus zwei an der Anlageplatte (10) einander gegenüberliegend angeformten Stegen (13) bestehen, an deren freien, auffederbaren Enden nach innen gerichtete Rasthaken (14) mit schräg zur Mitte verlaufenden Einführflächen (15) und quer zur Mitte abstehenden Halteflächen (16) angeformt sind.

3. Befestigungssystem nach Anspruch 1 oder 2, **dadurch gekennzeichnet, daß** die Spitzen (17) der Rasthaken (14) in Einführrichtung abgewinkelt sind, und die Profilleisten (5) mit entsprechenden Rillen (18) zum Eintauchen der Spitzen (17) versehen sind.

4. Befestigungssystem nach einem der Ansprüche 1 bis 3, **dadurch gekennzeichnet, daß** an einem Ende der Anlageplatte (10) ein weiterer Steg (20) mit einer rückwärts gerichteten, widerhakenartigen Kante (21) zum Eindrücken in die Schaumstoffunterlage (2) angeformt ist.
